# EUROPEAN PATENT APPLICATION

(11) **EP 4 728 853 A1**
(43) Date of publication of application: **22.04.2026**
(21) Application number: 24822130.1
(22) Date of filing: 13.06.2024
(51) Int. Cl.: A01G 23/095, A01G 23/083, A01G 3/08

(54) **HYDRAULIC TOOL FOR TREE PRUNING**

(30) Priority: 15.06.2023 BR 202023011841 U
(71) Applicant: Elektro Redes S/A, 13053-024 Campinas/SP (BR)
(72) Inventor: COSTA, Alexandre Albarello, 81531-980 Curitiba/PR (BR); NARA, Fábio Yukio, 81531-980 Curitiba/PR (BR); LEXINOSKI, Gilberto, 81531-980 Curitiba/PR (BR); SHIONO, Otavio Mitsuru, 81531-980 Curitiba/PR (BR); BRITO, José Antonio De Souza, 41815-140 Salvador/BA (BR); CORTEZ, Amanda Dias, 13053-024 Campinas/SP (BR); FUJITA, Antônio Palmiro, 13053-024 Campinas/SP (BR); CASARIN, Eduardo, 13053-024 Campinas/SP (BR)
(74) Representative: Cabinet Beau de Loménie
(86) International application number: PCT/BR2024/050254
(87) International publication number: WO 2024/254666

(57) **Abstract**

The present patent describes a hydraulic tool for pruning trees located near energized electrical power lines which, according to its characteristics, provides the formation of a hydraulic tool (1) in its own specific structure of the mechanical type, coupled to an electrically insulated hydraulic arm and a rotation system with 360° movement. The tool is based on a lower claw module (2) with articulated rods/claws (2B) and a rotary hydraulic actuator (2E), an intermediate lopper module (3) with an articulated lopper blade (3C), and an upper hydraulic saw module (4) with an articulated chain bar (4C) and belt transmission system (4D). The tool is designed to enable complete optimization of maintenance procedures for overhead energy distribution networks by pruning/cutting/sawing trees adjacent to energized power distribution conductors, eliminating the exposure of technicians during these routine procedures.

## Description

The present patent relates to the technical field of hydraulic tools for electric power distribution in general, more specifically to a hydraulic tool for tree pruning which, according to its general characteristics, is fundamentally designed to provide the formation of a hydraulic tool with its own specific mechanical structure coupled to an electrically insulated hydraulic arm and a rotation system with 360° rotational capability. It is based on a lower claw module with articulated rods and a rotary hydraulic actuator, an intermediate lopper module with an articulated blade, and an upper hydraulic saw module with an articulated chain bar and transmission system. The purpose is to provide an extremely practical, safe, and economical complete optimization of routine maintenance procedures of overhead electric distribution networks, primarily when pruning/cutting/sawing trees adjacent to energized electric distribution line conductors, eliminating worker exposure during these routine procedures, and providing a hydraulic tool with high strength, safety, and versatility.

With a specific design and shape and easy access for better adaptation and user safety, practical handling features, functionality, and highly accessible costs, and, due to its general characteristics and dimensions, it is easily adaptable to a wide variety of trees, energized electric networks, locations, and general users, regardless of their specific characteristics.

Trees located near electric conductors of overhead distribution networks are one of the main causes of interruptions in the supply of electrical energy to consumers and a constant source of maintenance needs. Falling and/or breaking of trees or their parts onto overhead distribution networks may cause electric conductor breakage, pole collapse, accessory fatigue, and consequently power outages.

Electric power distribution utilities or their service providers are responsible for performing all tree-pruning activities whenever the operating conditions of electric networks are threatened. It is noted that the more frequently this pruning procedure is performed, the fewer interruptions occur in the distribution of electrical energy. However, the costs associated with pruning these trees, in order to ensure minimum reliability of the overhead electric distribution networks, are very high.

It is further noted that tree-pruning procedures near overhead electric distribution networks are performed manually and involve high operational risks, especially for utility or service-provider technicians, since the activity involves working at heights, electrical shock hazards, tool handling, and precision operations, among others.

Currently, tree-pruning procedures widely known in the state of the art are based on manual pruning tools of the hydraulic or combustion-powered type, and all such tools must be insulating to avoid hazards to electricians. Among these tools, the following may be cited: for pruning smaller-diameter branches - shears; for pruning high branches - a pole pruner, essentially a pruning shear mounted on rods of variable lengths and actuated by a cord; for pruning larger-diameter branches - manual saws; and for pruning urban trees - a chainsaw with fixed support.

It should be emphasized that tree-pruning procedures in urban areas must follow the following standards: branches located below conductors and within the minimum safety distance of high-voltage primary networks must be removed by a "dead-line" crew using mechanical tools or pole saws and ladders; branches growing upward toward high-voltage primary networks, provided they are not touching conductors, must be pruned by a "dead-line" crew using mechanical tools or pole saws and ladders; and branches located above high-voltage primary networks and touching conductors must only be pruned with the network deenergized, tested, grounded, and signaled by "live-line" crews.

Given this scenario, particularly those related to the high-risk conditions to which workers are exposed and the importance of performing such procedures for the full functioning of overhead electric distribution networks, it has become essential for power utilities and service-provider companies, when performing tree-pruning procedures near electric distribution network conductors, to establish a device or equipment which, by virtue of its structural design, is capable of providing a new concept to optimize the execution of these tree-pruning procedures near overhead electric networks by utility or service-provider technicians.

A broad analysis of the literature was conducted to establish the current state of the art regarding hydraulic tools for tree pruning, primarily pruning trees near energized electric networks - the subject of the present patent. Some documents from the state of the art describe equipment for tree pruning; however, none of these documents proved relevant to the specific subject matter claimed herein, which integrates into a single tool a claw module, a lopper module, and a saw module, wherein the saw and lopper modules are coupled to the claw module as the main module attached to the tip of the hydraulic arm, with the rotation system based on a rotary hydraulic actuator.

Two patent documents representing the current state of the art, which, despite presenting a similar concept, differ substantially from the present invention in their structure, are briefly described below:
- BR102010019261-8 - "Modular Device for Tree Pruning," filed September 24, 2020, structured to be attached to any aerial bucket and comprising a rotation assembly with hydraulic motor and gears, a cutting assembly with bar, and a claw assembly; and
- BR102015012722-1 - "Telecommanded Robotic Equipment for Tree Pruning Near Energized Electric Networks," filed June 1, 2015, structured for attachment to a tool-alignment manipulator comprising a rotating-cutting saw and a pressure-type cutting lopper, and additionally allowing the use of a claw to prevent branches from falling freely, such that movement of the bar requires combined manipulation rotations.

Thus, the present patent is characterized by combining components and processes in a differentiated concept capable of meeting the various demands of tree-pruning operations near energized electric networks. This concept ensures a hydraulic tool offering high efficiency, functionality, strength, durability, safety, versatility, practicality, precision, ergonomics, and economy due to the excellent technical features incorporated, providing advantages and improvements to routine maintenance procedures of electric distribution networks, especially under energized conditions, and whose general characteristics differ from all known forms and models in the current state of the art.

The present patent concerns the use of a modern, efficient, safe, and functional hydraulic tool for pruning trees near energized electric networks, formed by a set of properly incorporated electromechanical solutions, composing a complete and differentiated hydraulic tool with exclusive design and specific characteristics. It incorporates a proprietary mechanical structure of high durability and resistance, parallelepipedal shape, and perfectly integrated and symmetrically arranged modules: a lower claw module with articulated rods and a rotary hydraulic actuator as the direct fastening element around tree points; an intermediate lopper module with articulated blade as the pruning/cutting element; and an upper hydraulic saw module with articulated chain bar and transmission system as the sawing/cutting element. The configuration enables the formation of a unique, complete, and safe assembly whose internal and external forms allow perfect adaptation to a wide range of trees and energized electric networks, being specially designed for such purposes.

Thus, the general design of the present hydraulic tool for pruning trees near energized electric networks is entirely based on its simple and robust structure with the minimum necessary components and an extremely simplified, safe, and optimized operation, combined with highly practical manufacturing and maintenance procedures. The result is a practical and efficient hydraulic tool coupled to an electrically insulated hydraulic arm by means of the lower claw module with a rotation system formed by a rotary hydraulic actuator that enables 360° rotation. This actuator supports, in an overlapping configuration, an intermediate lopper module with articulated cutting blade and an upper hydraulic saw module with articulated chain bar, both actuated by hydraulic cylinders and used for pruning/cutting trees near energized electric networks.

The present hydraulic tool is based on the application of components and processes in a differentiated design, without reaching a high degree of sophistication and complexity, thereby solving several of the main drawbacks of other known forms and models from the state of the art employed in tree-pruning procedures near energized electric networks, which typically present difficulties in use and application, low efficiency and performance, frequent accidents, high deterioration and fragility, low versatility, low precision, high insecurity, low productivity, high losses, difficult application, poor ergonomics, negligible performance, high cost, excessive size and weight, complex handling, high maintenance, difficult access, considerable time loss, and complex manufacturing.

The objectives, advantages, and other important characteristics of the present patent may be more easily understood when read together with the accompanying figures.

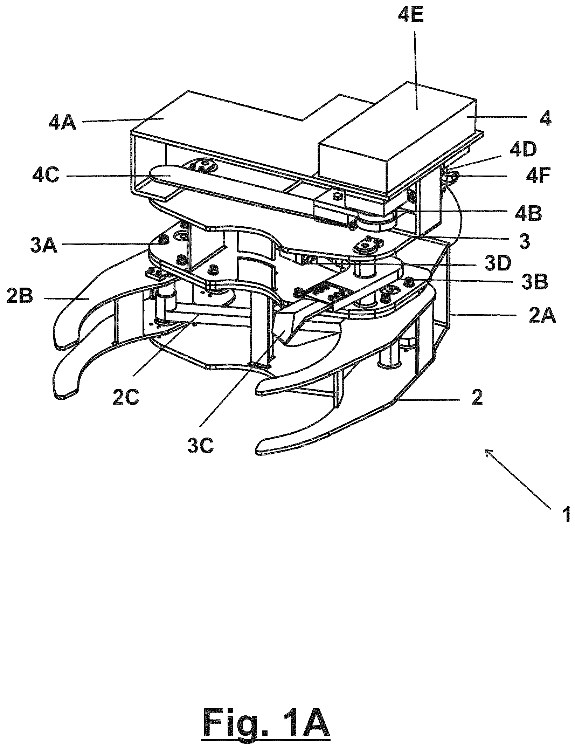

Figure 1A shows an anterior perspective view of the hydraulic tool for tree pruning.

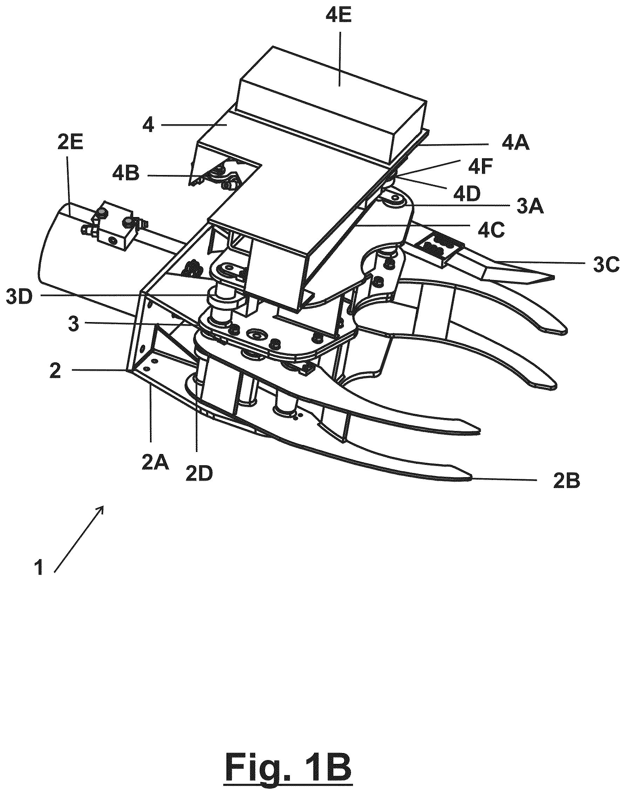

Figure 1B shows a lateral perspective view of the hydraulic tool for tree pruning.

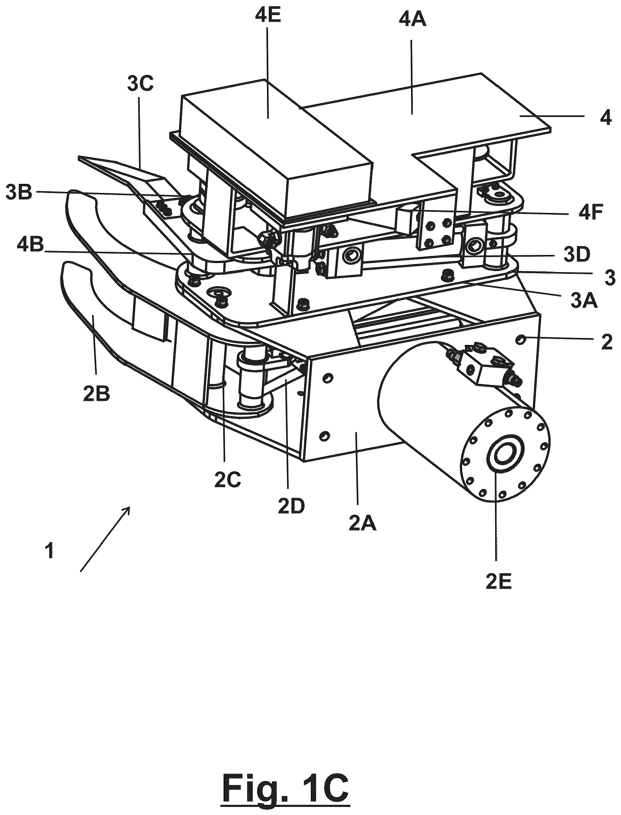

Figure 1C shows a posterior perspective view of the hydraulic tool for tree pruning.

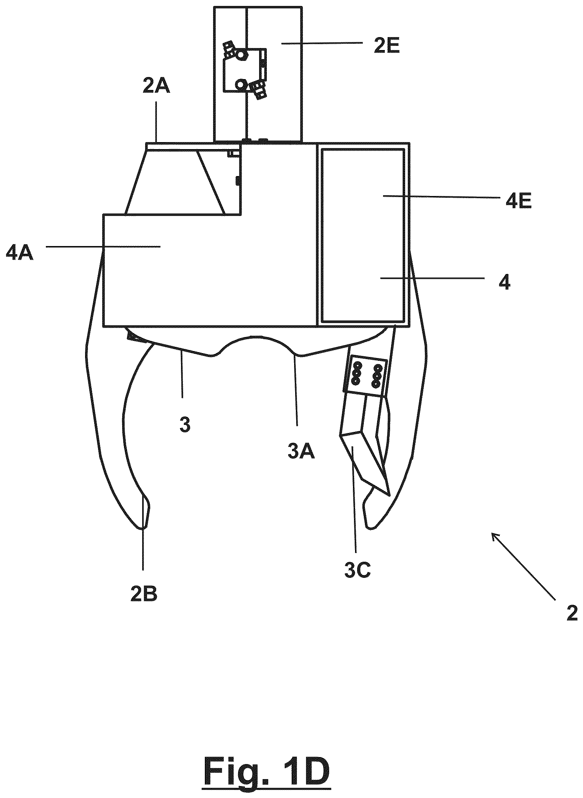

Figure 1D shows a top view of the hydraulic tool for tree pruning.

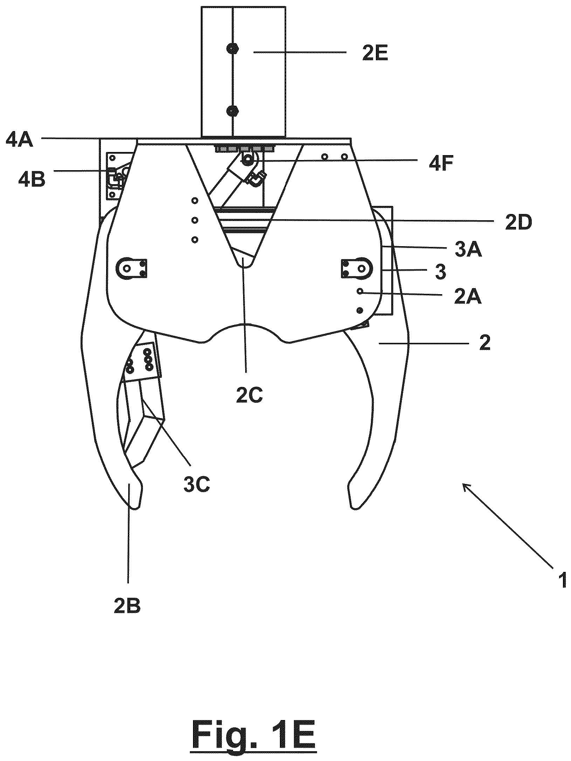

Figure 1E shows a bottom view of the hydraulic tool for tree pruning.

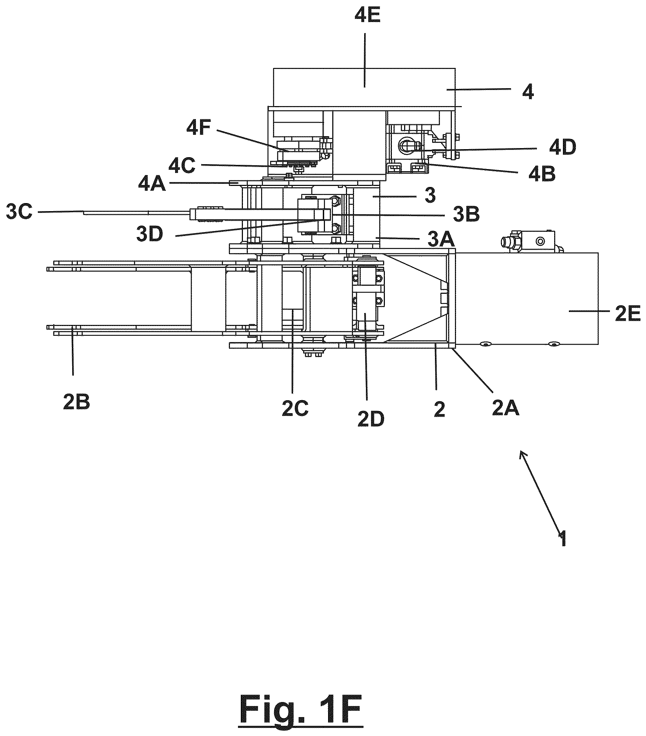

Figure 1F shows a left-side view of the hydraulic tool for tree pruning.

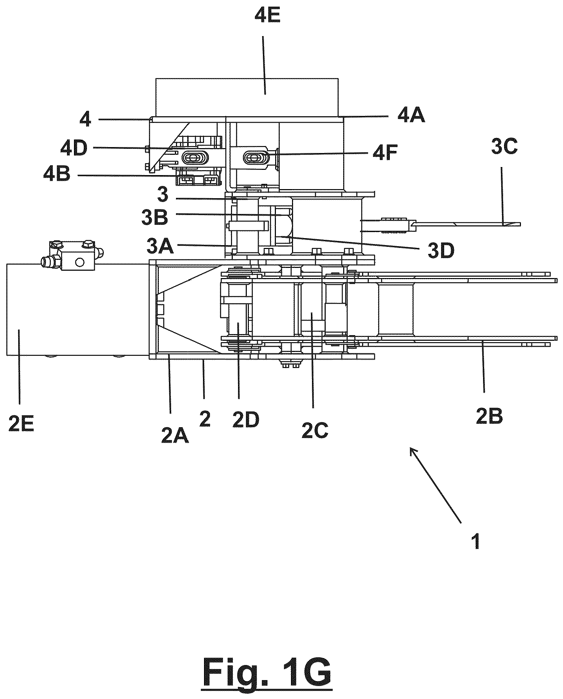

Figure 1G shows a right-side view of the hydraulic tool for tree pruning.

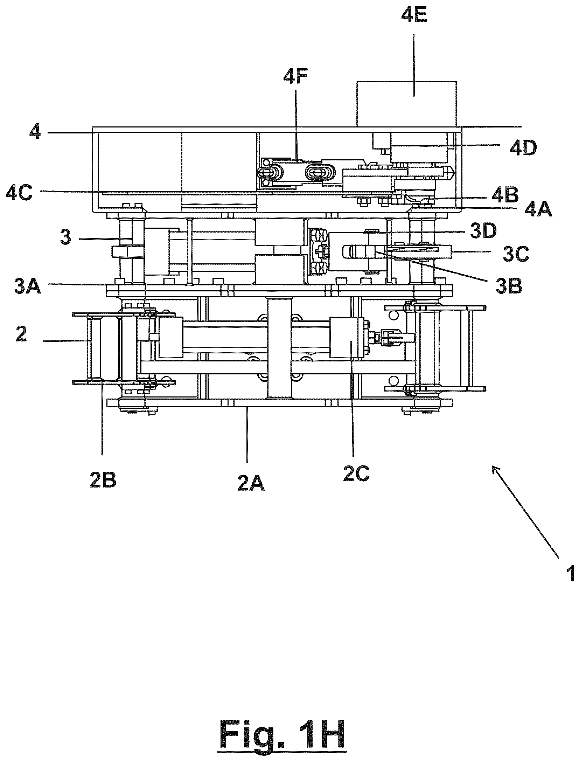

Figure 1H shows a front view of the hydraulic tool for tree pruning.

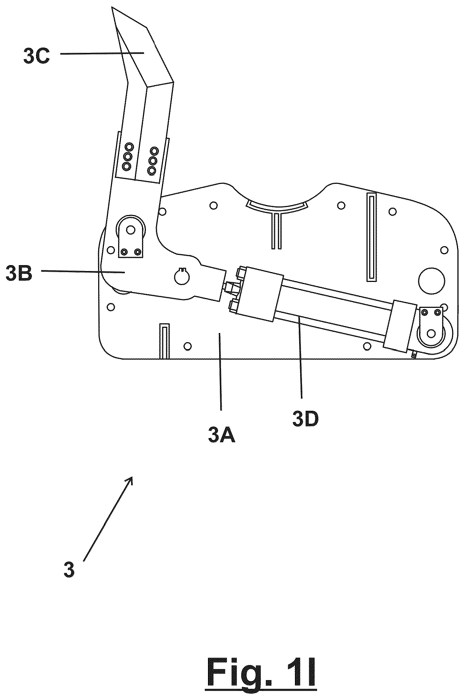

Figure 1 shows a bottom view of the intermediate lopper module of the hydraulic tool for pruning trees near energized electric networks.

As inferred from the accompanying figures which illustrate and form part of the present descriptive report Iof the "Hydraulic Tool for Tree Pruning," Figure 1A presents the tool in general, comprising a complete hydraulic tool (1) with proprietary characteristics incorporating a mechanical structure of high durability and resistance, parallelepipedal shape, internal and external configurations adaptable to a wide range of trees and energized electric networks, and containing perfectly integrated and symmetrically arranged components:
Figure 1I shows a bottom view of the intermediate pruning-lopper module of the hydraulic tool for pruning trees located near energized power lines.

As inferred from the attached figures that illustrate and form an integral part of the present descriptive report of the patent entitled 'Hydraulic Tool for Tree Pruning,' Figure (1A) presents the tool in general, comprising a complete hydraulic tool (1) with its own characteristics, incorporating a specific mechanical structure of high durability and strength, a parallelepiped format, and internal and external shapes and arrangements that adapt to a wide range of trees and energized power networks in general. It includes, perfectly integrated and symmetrically arranged with respect to one another: a lower claw module (2), parallelepiped, arranged horizontally and symmetrically along the entire length of the lower portion of the hydraulic tool (1), and comprising a hollow parallelepiped support structure (2A) arranged horizontally and symmetrically along the entire length of the lower claw module (2); two articulated curved rods/claws (2B) with a central curved recess, arranged horizontally, parallel, and symmetrically spaced along the inner lateral ends of the support structure (2A), extending beyond its front ends; an interconnection arm (2C), straight, arranged horizontally and perpendicularly, symmetrically interconnecting the postero-inner end of the left articulated rod/claw (2B) and the inner lateral portion of the right articulated rod/claw (2B) inside the support structure (2A), ensuring synchronous opening and closing motions of both rods/claws; a hydraulic cylinder (2D), arranged horizontally and perpendicularly, symmetrically interconnecting the postero-inner ends of the articulated rods/claws (2B) inside the support structure (2A) to actuate the movement of both rods/claws (2B); and a rotary hydraulic actuator (2E), cylindrical, with 360° rotation, arranged horizontally and perpendicularly, symmetrically centered on the posterior face of the support structure (2A) to provide 360° rotation of the hydraulic tool (1) on the hydraulic arm; an intermediate lopper module (3), parallelepiped, arranged horizontally, parallel, and symmetrically on the upper face of the lower claw module (2), in the central portion of the hydraulic tool (1), and comprising a hollow parallelepiped support structure (3A) arranged horizontally and symmetrically along the entire length of the intermediate lopper module (3) and in parallel over the anterosuperior face of the support structure (2A); an articulated support (3B), similar to a lying "L", arranged horizontally, parallel, and symmetrically on the inner portion of the anterolateral left end of the support structure (3A); a pruning blade (3C), pointed and rectangular, arranged horizontally and symmetrically aligned at the anterior end of the articulated support (3B) by means of removable fasteners, extending beyond the anterior end of the support structure (3A) for rotational movement and pressing action; and a hydraulic cylinder (3D), arranged horizontally, parallel, and symmetrically interconnecting the posterior end of the articulated support (3B) and the postero-inner right end of the support structure (3A) inside the support structure (2) to apply force to the articulated support (3B) and, consequently, to the pruning blade (3C); and an upper hydraulic saw module (4), parallelepiped, arranged horizontally, parallel, and symmetrically over the upper face of the intermediate lopper module (3), in the upper portion of the hydraulic tool (1), and comprising a hollow parallelepiped support structure (4A) arranged horizontally and symmetrically along the entire length of the intermediate lopper module (3) and parallel to the upper face of the support structure (3A); a hydraulic motor (4B), arranged horizontally, parallel, and symmetrically on the inner portion of the postero-lateral left end of the support structure (4A) for driving the articulated chain bar (4C); an articulated chain bar (4C), straight, arranged horizontally, parallel, and symmetrically beneath and along the entire inner length of the anterior end of the support structure (4A); a belt transmission system (4D), arranged horizontally, parallel, and symmetrically along the entire lateral left end of the support structure (4A), interconnecting the hydraulic motor (4B) to the posterior end of the articulated chain bar (4C) to increase the rotational speed of the articulated chain bar (4C); a sealing casing (4E), parallelepiped, arranged horizontally and symmetrically over and around the entire length of the belt transmission system (4D) on the upper face of the support structure (4A) to protect the belt transmission system (4D); a hydraulic cylinder (4F), arranged horizontally, parallel, and symmetrically inside the support structure (4A) and interconnected to the posterior end of the articulated chain bar (4C) to actuate the movement of the articulated chain bar assembly (4C); and a lubrication system for the chain bar, arranged beneath the lower face of the support structure and adjacent to the articulated chain bar (4C), comprising an oil reservoir and a gear pump that uses the hydraulic oil from the hydraulic motor (4B) as the lubrication medium.

The hydraulic tool for pruning trees near energized power lines operates based on its correct fixation to an electrically insulated hydraulic arm by means of the lower claw module (2) as the main module, such that, when only one of the other two cutting modules is used, the lopper module (3) and the hydraulic saw module (4) are attached directly onto the lower claw module (2); and when all three modules are used together, the lopper module (3) is directly attached onto the lower claw module (2) and the hydraulic saw module (4) is attached onto the lopper module (3); these attachments being made by means of fastening unions.

In the lower claw module (2), the two articulated rods (2B) are interconnected posteriorly by a hydraulic cylinder (2D) that performs the movement operations of the two articulated rods (2B), and by an interconnection arm (2C) that ensures synchronized opening and closing operations of the two articulated rods (2B). Additionally, a rotary hydraulic actuator (2E) allows the hydraulic tool (1) to rotate 360° on the hydraulic arm to which it is connected, ensuring the best alignment of the hydraulic tool (1) for pruning trees.

In the intermediate lopper module (3), the cutting of trees and branches is performed by applying force to the articulated support (3B) via the hydraulic cylinder (3D), causing the pruning blade (3C) to perform a rotational movement and press the branch against the structure of the hydraulic tool (1). In other words, the intermediate lopper module (3) was designed to perform cutting by applying force to the pruning blade (3C) via the hydraulic cylinder (3D).

In the intermediate lopper module (3), the pruning blade (3C) is fixed to the articulated support (3B) by removable fasteners, so that, when necessary due to wear or breakage, the pruning blade (3C) can be replaced practically, quickly, and safely.

In the hydraulic saw module (4), the movement of the chain on the articulated chain bar (4C) is driven by the hydraulic motor (4B) with a belt transmission system (4D) to increase chain speed, and the movement of the articulated chain bar assembly (4C) is performed by the hydraulic cylinder (4F). Additionally, the chain bar lubrication system uses the hydraulic oil from the hydraulic motor (4B) itself for lubrication - that is, when driven by the hydraulic motor (4B) through belts and pulleys, oil is pumped directly onto the chain of the articulated chain bar (4C).

The hydraulic tool for pruning trees near energized power lines, having its components fully integrated with each other so that nothing detaches or bends, achieves a high level of performance and efficiency, combined with high durability and absolute safety. Once fully integrated with each other and with the electrically insulated hydraulic arm, the components remain fixed and cohesive, preventing unintended detachment during use, and keeping the assembly fully available for maintenance procedures on overhead power distribution networks, especially for pruning/cutting trees near energized distribution lines. In this way, the hydraulic tool (1) can be used without concern of any kind, particularly regarding the durability and safety of its components, as well as the safety of utility technicians.

The hydraulic tool for pruning trees near energized power lines presents the following specific advantages: versatile coupling capability at the free end of an electrically insulated hydraulic arm, providing safety and robustness; high resistance to weather conditions in energized power networks, providing durability and strength; complete maintenance of the structural integrity of the distribution network even under extreme conditions, with no contact with energized power lines; high articulation/rotation capacity for the required position during maintenance near trees, providing operational versatility; high capacity to maintain the three operational modules during service execution, providing efficiency; and complete electrical isolation when operating in energized power networks, ensuring operator safety.

Based on everything presented, this hydraulic tool will be well received by electric utility companies and their service providers responsible for maintenance of electrical networks in general, as the hydraulic tool for pruning trees near energized power lines offers numerous advantages, such as: high safety, reliability, and agility in its application; high output and performance due to its overall design; great comfort, convenience, and safety for technicians; extremely high strength and overall durability, combined with low or no wear of the assembly as a whole; fully accessible costs, enabling an excellent cost-benefit ratio; practical and safe use by a wide range of technicians; large reach capacity; very low and practical overall maintenance; perfect and direct adaptation to various types of trees and energized electrical networks; high operational precision; high operational ergonomics; capacity to support various types of trees; high resistance to weather conditions; and the assurance of having a hydraulic tool (1) that fully complies with current laws and standards and with the basic conditions required for its application as a whole.

All these attributes allow classifying the hydraulic tool for pruning trees near energized power lines as a completely versatile, efficient, practical, and safe means for performing a wide range of pruning/cutting/sawing procedures on the most diverse types of trees, in the most diverse types of energized electrical networks, in the most diverse locations, and by the most diverse technicians, regardless of their general characteristics. It also offers great ease of application and handling, combined with great performance and excellent general characteristics; however, it is not limited at any time to the representations described herein, and should be understood within its broad claim scope, that is, it is not limited to the specific form disclosed, and other similar forms are considered fully included within the claimed scope.

## Claims

1. Hydraulic tool for tree pruning, **characterized in that** it comprises a hydraulic tool (1) incorporating a mechanical-type structure of parallelepiped shape and containing, integrated and symmetrically arranged with respect to one another:
- a lower claw module (2) of parallelepiped shape, arranged horizontally and symmetrically along the entire length of the lower portion of the hydraulic tool (1), and comprising a hollow parallelepiped support structure (2A) arranged horizontally and symmetrically along the entire length of the lower claw module (2); two articulated rods/claws (2B), curvilinear with a central curvilinear recess, arranged horizontally, parallel, and symmetrically spaced along the inner lateral ends of the support structure (2A) and extending through the anterior ends thereof; an interconnection arm (2C), rectilinear and arranged horizontally and perpendicularly, symmetrically interconnecting the posterior-inner end of the left articulated rod/claw (2B) to the inner lateral portion of the right articulated rod/claw (2B) inside the support structure (2A), for synchronizing the two rods/claws; a hydraulic cylinder (2D), arranged horizontally and perpendicularly, symmetrically interconnecting the posterior-inner ends of the articulated rods/claws (2B) for actuating the movement of the two rods/claws (2B); and a rotary hydraulic actuator (2E), cylindrical, with 360° rotation, arranged horizontally and perpendicularly, symmetrically centered on the posterior face of the support structure (2A) for 360° rotation on the hydraulic arm;
- an intermediate pruning module (3) of parallelepiped shape, arranged horizontally, parallel, and symmetrically over the upper face of the lower claw module (2), in the central portion of the hydraulic tool (1), and comprising a hollow parallelepiped support structure (3A) arranged horizontally and symmetrically along the entire length of the intermediate pruning module (3) and parallel to the anterosuperior face of the support structure (2A); an articulated support (3B), similar to a lying "L", arranged horizontally, parallel, and symmetrically inside the anterolateral left end of the support structure (3A); an articulated pruning blade (3C), pointed rectangular, arranged horizontally and symmetrically aligned at the anterior end of the articulated support (3B), by means of removable fasteners, and extending through the anterior end of the support structure (3A), for rotational movement and pressing action; and a hydraulic cylinder (3D), arranged horizontally, parallel, and symmetrically interconnecting the posterior end of the articulated support (3B) and the posterior-inner right end of the support structure (3A), inside the support structure (2), for applying force on the articulated support (3B) and the pruning blade (3C);
- and an upper hydraulic saw module (4) of parallelepiped shape, arranged horizontally, parallel, and symmetrically over the upper face of the intermediate pruning module (3), in the upper portion of the hydraulic tool (1), and comprising a hollow parallelepiped support structure (4A) arranged horizontally and symmetrically along the entire length of the intermediate pruning module (3) and parallel to the upper face of the support structure (3A); a hydraulic motor (4B), arranged horizontally, parallel, and symmetrically inside the posterolateral left end of the support structure (4A); an articulated chain bar (4C), rectilinear, arranged horizontally, parallel, and symmetrically under and along the entire length of the inner anterior end of the support structure (4A); a belt transmission system (4D), arranged horizontally, parallel, and symmetrically along the entire lateral left end of the support structure (4A), interconnecting the hydraulic motor (4B) to the posterior end of the articulated chain bar (4C) to increase rotation; a sealing housing (4E), parallelepiped, arranged horizontally and symmetrically over and around the entire length of the belt transmission system (4D) on the upper face of the support structure (4A); a hydraulic cylinder (4F), arranged horizontally, parallel, and symmetrically inside the support structure (4A), interconnecting the posterior end of the articulated chain bar (4E) for actuating the movement of the articulated chain bar assembly (4C); and a chain lubrication system arranged under the lower face of the support structure and adjacent to the articulated chain bar (4E), and comprising an oil reservoir and a gear pump for lubrication using the hydraulic oil of the hydraulic motor (4B).

2. Hydraulic tool for tree pruning, according to claim 1, **characterized in that**, when only one of the other two cutting modules is used, the pruning module (3) and the hydraulic saw module (4) are directly coupled onto the lower claw module (2); and when the three modules are used together, the pruning module (3) is directly coupled onto the lower claw module (2) and the hydraulic saw module (4) is coupled onto the pruning module (3); said couplings being performed by means of fastening unions.
